Europäisches Patentamt

European Patent Office

Office européen des brevets

(11) Publication number : **0 478 335 A2**

# (12) EUROPEAN PATENT APPLICATION

(21) Application number : **91308812.6**

(51) Int. Cl.⁵ : **H04N 1/387**

(22) Date of filing : **27.09.91**

(30) Priority : **28.09.90 US 590633**

(43) Date of publication of application :
**01.04.92 Bulletin 92/14**

(84) Designated Contracting States :
**DE FR GB**

(71) Applicant : **XEROX CORPORATION**
**Xerox Square**
**Rochester New York 14644 (US)**

(72) Inventor : **Hengst, Acco**
**146 Valley View Drive, Apartment 312**
**Lewisville, TX, 75067 (US)**
Inventor : **King, Linda D.**
**193 Hillbridge Drive**
**Rochester, New York, 14612 (US)**

(74) Representative : **Johnson, Reginald George et al**
**Rank Xerox Patent Department, Albion House,**
**55 New Oxford Street**
**London WC1A 1BS (GB)**

(54) **Electronic printing system.**

(57)    Process for creating a merge library of merge items for merger with prints produced by an electronic printer and for selecting and editing merge items from the merge library for use. There is described a process for merging a merge item (168) with the prints output by an electronic printer when printing a print job, including providing a library of electronic merge items (168) in memory means for merging with prints output by said printer, programming a print job, providing electronic images for use in making prints for said job and selecting one of said merge items in said library for merging with the prints of said job, characterized by electronically displaying on a screen a print outline (174) together with an outline of the merge item (168) selected superimposed on said print outline (174), adjusting a parameter of said selected merge item (168) on said print outline (174) while displaying each change made in the parameter of said selected merge item (168) relative to said print on said screen, and merging the adjusted merge item (168) with each of the prints produced by said printer for said job.

EP 0 478 335 A2

Jouve, 18, rue Saint-Denis, 75001 PARIS

FIG. 17

The invention relates to an electronic printing system, and more particularly, but not exclusively, to a process for creating, storing, and merging merge items, such as logos, with prints produced by the system.

Electronic printing systems employ image signals or pixels as the image source when producing prints. One source of image signals is a document scanner which scans the documents that comprise the job and converts images on the documents to the image signals necessary to produce prints. Electronic printing systems of this type are typically laser or ink jet printers.

In using electronic printing systems of the type described, it is sometimes desirable to add an additional image such as a logo, picture, heading, etc. (referred to herein a as 'merge item') to the prints being made. In this context, not only does the operator want to add a specific merge item, but normally will also want to tailor the added image to the particulars of the job that is being printed. As a result, not only is selection of the specific merge item important but also size, placement on the prints, orientation, etc. In most cases for example, it is unacceptable that the added merge item cover or hide any port of the document image being printed and to avoid this, re-locating of the merge item on the print and/or changing the size and orientation of the item may be of paramount importance.

Adding a standardized merge item to the prints output by an electronic printing system may be done in a number of ways. In one way, a hard copy of the standardized merge item such as a logo is attached to the document before scanning, the merge item having the correct size being placed in the desired orientation and location. However, a manual operation such as this is slow and cumbersome. Another method is to use an annotator such as a small imaging device positioned so as to expose a predetermined part of the recording member on which the print image is created. However, the flexibility and freedom for change in image position and content is greatly limited by annotator systems such as this.

In the prior art, U.S. Patent No. 4,270,146 to Adachi discloses a facsimile system wherein image identification information stored in memory is retrieved and substituted for part of the original image information being transmitted. U.S. Patent No. 4,542,378 to Suganuma et al discloses a document processing system in which forms are read and stored in memory and thereafter recalled as an electronic overlay into which additional image data is input as the form is filled out while U.S. Patent No. 4,829,453 to Katsuta et al discloses an apparatus for cataloging image data in electronic files which can be later retrieved for display upon request. U.S. Patent No. 4,641,197 to Miyagi discloses a process for scoring text and document image data in separate places for independent processing without interference while U.S. Patent No. 4,679,155 to Mitsuka discloses a process for doing electronic layout work such as coordinate rotation using image data obtained by scanning. U.S. Patent No. 4,642,699 to Ohi discloses a method of superimposing line images of characters at specific coordinate locations within a stored pictorial image to produce a combined image for recording. And U.S. Patent No. 4,813,013 to Dunn discloses a computer graphics processing system which allows general purpose graphics symbols to be put into specific coordinate locations on digitized forms while U.S. Patent No. 4,823,303 to Terasawa discloses a display control with data storage units to separately store text, graphics, and image data for combination with additional graphics, providing a composite document.

The object of the present invention is to provide an improved process for merging a merge item with the prints output by an electronic printer in which the operation can be performed faster, with greater flexibility, and freedom for change in image position and content.

Accordingly, the present invention provides a process for merging a merge item with the prints output by an electronic printer when printing a print job, including providing a library of electronic merge items in memory means for merging with prints output by said printer, programming a print job, providing electronic images for use in making prints for said job and selecting one of said merge items in said library for merging with the prints of said job, characterized by electronically displaying on a screen a print outline together with an outline of the merge item selected superimposed on said print outline, adjusting a parameter of said selected merge item on said print outline while displaying each change made in the parameter of said selected merge item relative to said print on said screen, and merging the adjusted merge item with each of the prints produced by said printer for said job.

The invention also provides an electronic printing system having memory means for storing electronic images for a print job, printing means for making prints from said electronic images, and an electronic display screen, image creating means for providing a library of electronic merge items in said memory means for merging with the prints of said print job produced by said printing means, and selecting means for selecting one of said merge items from said memory means for merging with said prints, characterized by display means for electronically displaying on said screen a print outline together with an outline of the merge item selected superimposed on said print outline, adjusting means for adjusting the size and/or location of said selected merge item on said print outline while displaying each change made in the size and/or location of said selected merge item relative to said print on said screen, and merging means for merging the adjusted merge item with the electronic images comprising said print job when printing said print job.

The invention also provides a process for creating a library of merge items for merger with prints produced by an electronic printer, characterized in that for each one of said merge items, scanning a document having an image of the merge item thereon to provide image signals of the document image including the merge item, using said image signals to provide a display of the scanned image of said document on a screen, removing images other than said merge item image from the document image displayed on said screen, rescanning the portion of the document image following said removal of images to provide image signals representative of said merge item image, and storing said image signals of said merge item image in said library.

The invention will be described further, by way of example, with reference to the accompanying drawings, in which:-

Figure 1 is a view depicting an electronic printing system incorporating the image merge function in one embodiment of the present invention;

Figure 2 is a block diagram depicting the major elements of the printing system shown in Figure 1;

Figure 3 is a plan view illustrating the principal mechanical components of the printing system shown in Figure 1;

Figure 4 is a schematic view showing certain construction details of the document scanner;

Figures 5A, 5B and 5C comprise a schematic block diagram showing the major parts of the system control section;

Figure 6 is a block diagram depicting the Operating System, with Printed Wiring Boards and shared line connections;

Figure 7 is a view of the User Interface touchscreen display in the job Programming mode displaying examples of Job Tickets and Job Scorecards used for programming jobs;

Figures 8A and 8B comprise a flow chart depicting the selection of a merge item from the Merge Library;

Figure 9 is a view of the touchscreen display depicting the programming selections for accessing the image Merge Library;

Figure 10 is a view of the touchscreen display depicting the programming selections following opening of one of the subdirectories in the image Merge Library;

Figure 11 is a view of the touchscreen display depicting the property sheet selections for a specific merge item selected from a subdirectory in the image Merge Library;

Figure 12 is a view of the touchscreen display depicting selection of the Properties selection of the Property Sheet shown in Figure 10;

Figure 13 is a view of the touchscreen display depicting the properties of the merge item selected in Figure 10;

Figure 14 is a view of the touchscreen display depicting selection of the Preview selection of the Property Sheet shown in Figure 10;

Figure 15 is a view of the touchscreen display depicting additional properties of the merge item selected in Figure 10 following selection of Preview;

Figure 16 is a view of the touchscreen display depicting selection of the Merge selection of the Property Sheet shown in Figure 10;

Figure 17 is a view of the touchscreen display depicting the programming selections including a display of the merge item on a print following the Merge selection;

Figure 18 is a flow chart depicting the creation of a merge item for use with a job being programmed and/or for storage in the Merge Library; and

Figure 19 is a view of the touchscreen display depicting cut and paste programming features for creating merge items.

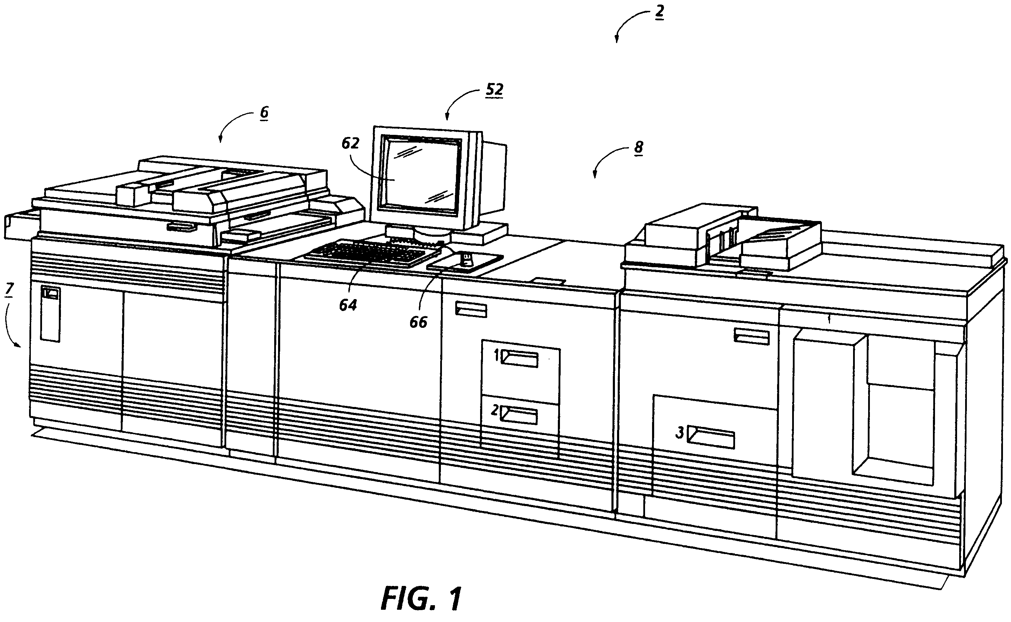

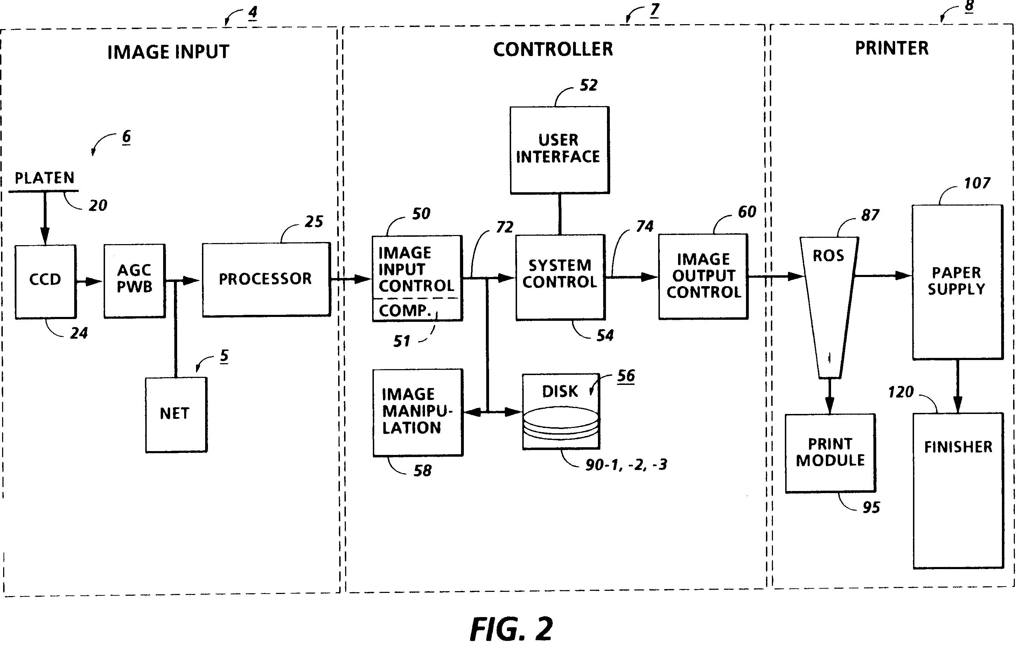

Referring to Figures 1 and 2, there is shown an exemplary image printing system 2 for processing print jobs. Printing system 2 for purposes of explanation is divided into image input section 4, controller section 7, and printer section 8. In the example shown, image input section 4 has both remote and on-site image inputs, enabling system 2 to provide network, scan, and print services. Other system combinations may be envisioned such as a stand alone printing system with on-site image input (i.e., a scanner), controller, and printer; a network printing system with remote input, controller, and printer, etc. While a specific printing system is shown and described, the present invention may be used with other types of printing systems. For example, printer section 8 may instead use a different printer type such as ink jet, ionographic, etc.

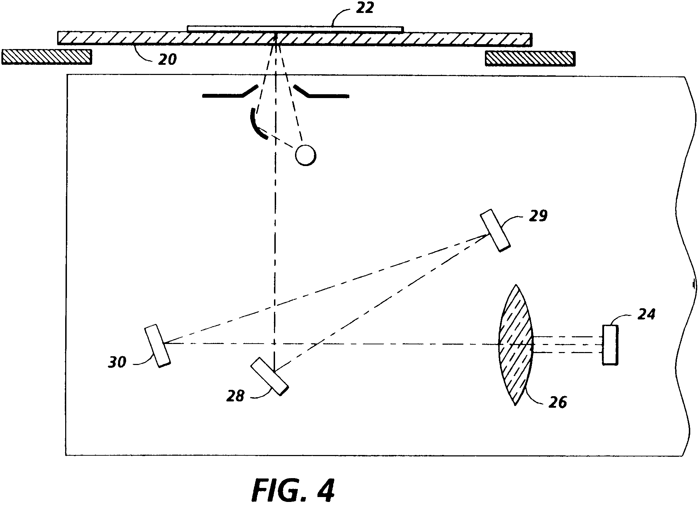

Referring particularly to Figures 2-4, for off-site image input, image input section 4 has a network 5 with a suitable communication channel such as a telephone line enabling image data in the form of image signals or pixels from one or more remote sources to be input to system 2 for processing. Where the Page Description Language (PDL) of the incoming imaging data is different than the PDL used by system 2, suitable conversion means (not shown) are provided. Other remote sources of image data such as streaming tape, floppy disk, etc. may be envisioned.

For on-site image input, section 4 has a document scanner 6 with a transparent platen 20 on which documents 22 to be scanned are located. One or more linear arrays 24 are supported for reciprocating scanning movement below platen 20. Lens 27 and mirrors 28, 29, 30 cooperate to focus array 24 on a line like segment of platen 20 and the document being scanned thereon. Image data in the form of image signals or pixels from net 5 or array 24 are input to processor 25 for processing. After processing, the image signals are output to controller section 7.

Processor 25 converts the analog image signals output by array 24 to digital. Processor 25 further processes image signals as required to enable system 2 to store and handle the image data in the form required to carry out the job programmed. Processor 25 also provides enhancements and changes to the image signals such as filtering, thresholding, screening, cropping, scaling, etc.

Documents 22 to be scanned may be located on platen 20 for scanning by automatic document handler (ADF) 35 operable in either a Recirculating Document Handling (RDH) mode or a Semi-Automatic Document Handling (SADH) mode. A manual mode including a Book mode and a Computer Forms Feeder (CFF) mode are also provided, the latter to accommodate documents in the form of computer fanfold. For RDH mode operation, document handler 35 has a document tray 37 in which documents 22 are arranged in stacks or batches. The documents 22 in tray 37 are advanced by vacuum feed belt 40 and document feed rolls 41 and document feed belt 42 onto platen 20 where the document is scanned by array 24. Following scanning, the document is removed from platen 20 by belt 42 and returned to tray 37 by document feed rolls 44.

For operation in the SADH mode, a document entry slot 46 provides access to the document feed belt 42 between tray 37 and platen 20 through which individual documents may be inserted manually for transport to platen 20. Feed rolls 49 behind slot 46 form a nip for engaging and feeding the document to feed belt 42 and onto platen 20.Following scanning, the document is removed from platen 20 and discharged into catch tray 48.

For operation in the manual mode, document handler 35 is pivoted upwardly to expose platen 20. This permits the document 22 to be manually placed on platen 20 following which array 24 is operated to scan the document. When scanning is completed, the document is removed to clear platen 20 for the next document. For Book mode, the book is manually positioned face down on platen 20 with the center line of the book aligned with positioning indicia (not shown) located along the border of platen 20. By programming the system, either one or both of the pages of the book open on the platen are scanned. The process is repeated for different pages of the book until all of the pages desired have been scanned following which the book is removed to clear platen 20.

For operation in the CFF mode, computer forms material is fed through slot 46 and advanced by feed rolls 49 to document feed belt 42 which in turn advances a page of the fanfold material into position on platen 20.

Referring to Figures 1, 2 and 5, controller section 7 includes image input control 50, User Interface (UI) 52, system control 54, main memory 56, image manipulation section 58, and image output control 60. Image data from processor 25 of image input section 4 is input to image input control 50 where the data is compressed and temporarily stored in Random Access Memory (RAM) 26 pending transfer to main memory 56 where the data is held pending use.

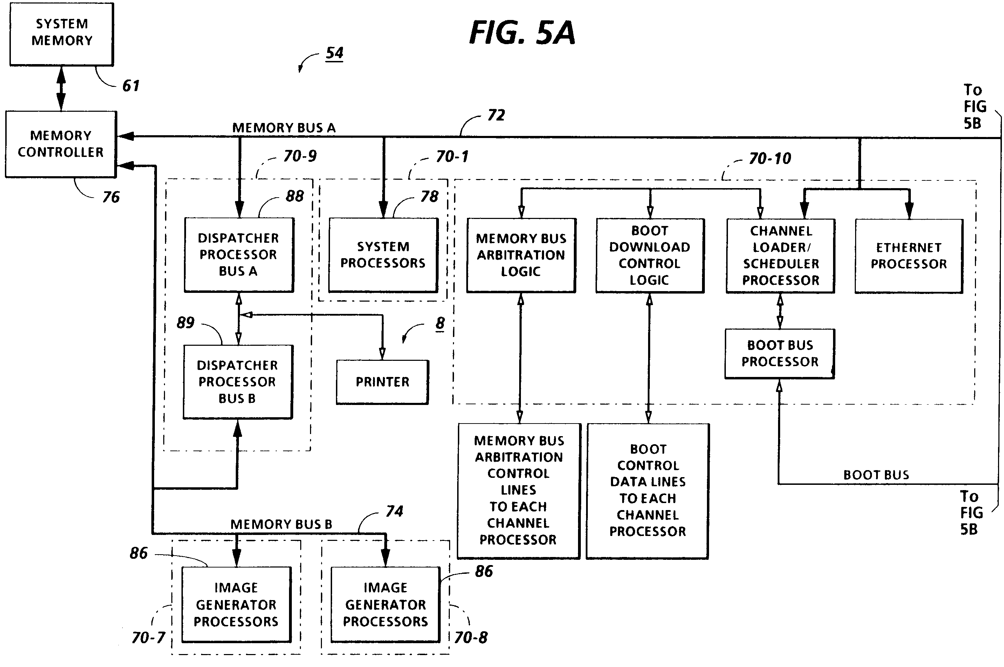

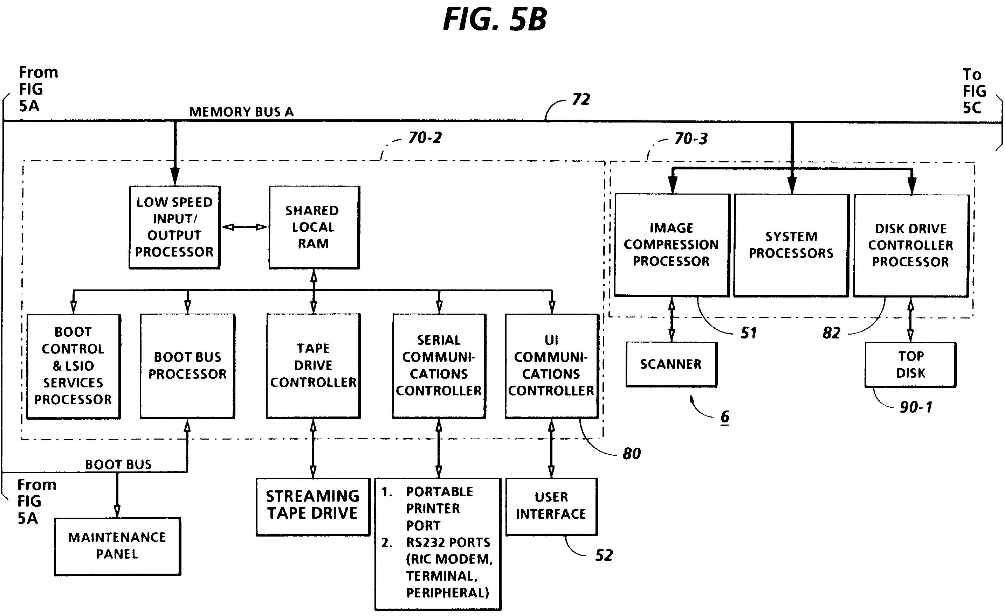

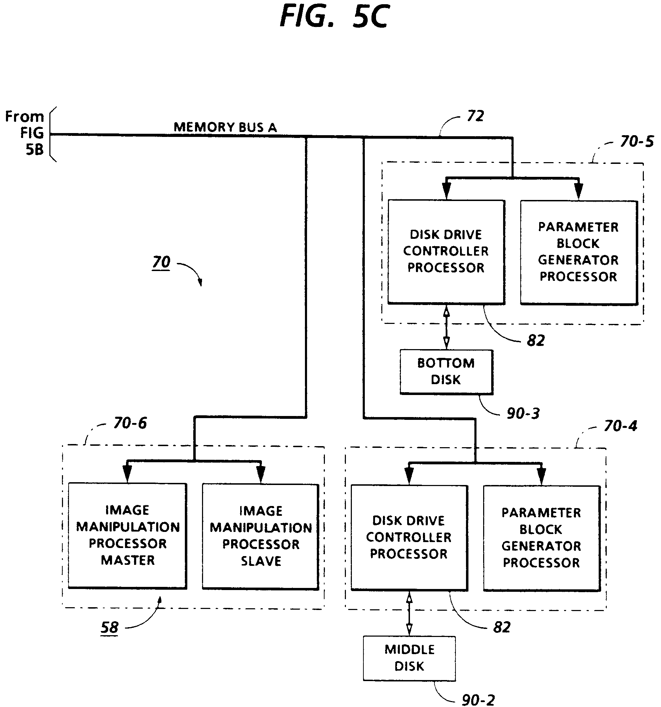

As seen in Figures 5A and 5B, control section 7 has a plurality of Printed Wiring Boards (PWBs) 70 coupled with one another and with RAM 26 by memory buses 72, 74. Memory controller 76 couples RAM 26 with buses 72, 74. PWBs 70 include system processor PWB 70-1 having plural system processors 78; low speed I/O processor PWB 70-2 with UI communication controller 80 for transmitting data to and from UI 52; PWBs 70-3, 70-4, 70-5, with disk drive controller/processors 82 for transmitting data to and from disks 90-1, 90-2, 90-3 respectively of main memory 56, with PWB 70-3 having image compressor/processor 51 for compressing the image data; image manipulation PWB 70-6 with image manipulation processor 85; and image generation processor PWBs 70-7, 70-8 with image generation processors 86 for processing the image data for output to printer section 8 and dispatch processor PWB 70-9 for controlling transmission of data via dispatch processors 88, 89 to and from printer section 8.

UI 52 includes a combined operator controller/CRT display consisting of an interactive touchscreen 62, keyboard 64, and mouse 66. UI 52 interfaces the operator with printing system 2, enabling the operator to program print jobs and other instructions, to obtain system operating information, instructions, programming information, diagnostic information, etc. Items displayed on touchscreen 26 such as files and icons are actuated by either touching the displayed item on screen 26 with a finger or by using mouse 66 to move a cursor 67 to point the cursor to the item selected and keying the mouse.

Main memory 56 has plural hard disks 90-1, 90-2, 90-3 for storing machine Operating System software, machine operating data, and the scanned image data currently being processed.

When the compressed image data in main memory 56 requires further processing, or is required for display on touchscreen 62 of UI 52, or is required by printer section 8, the data is accessed in main memory 56. Where further processing other than that provided by processor 25 is required, the data is transferred to image manipulation section 58 on PWB 70-6 where the additional processing steps selected such as collation, make ready, decomposition, etc are carried out. Following processing, the data may be returned to main memory S6, sent to UI 52 for display on touchscreen 62, or sent to image output control 60.

Image data output to image output control 60 is decompressed and readied for printing by image generating processors 86 of PWBs 70-7, 70-8. Following this, the data is output by dispatch processors 88, 89 of PWB 70-9 to printer section 8. Image data sent to printer section 8 for printing is normally purged from memory 56 to make room for new image data.

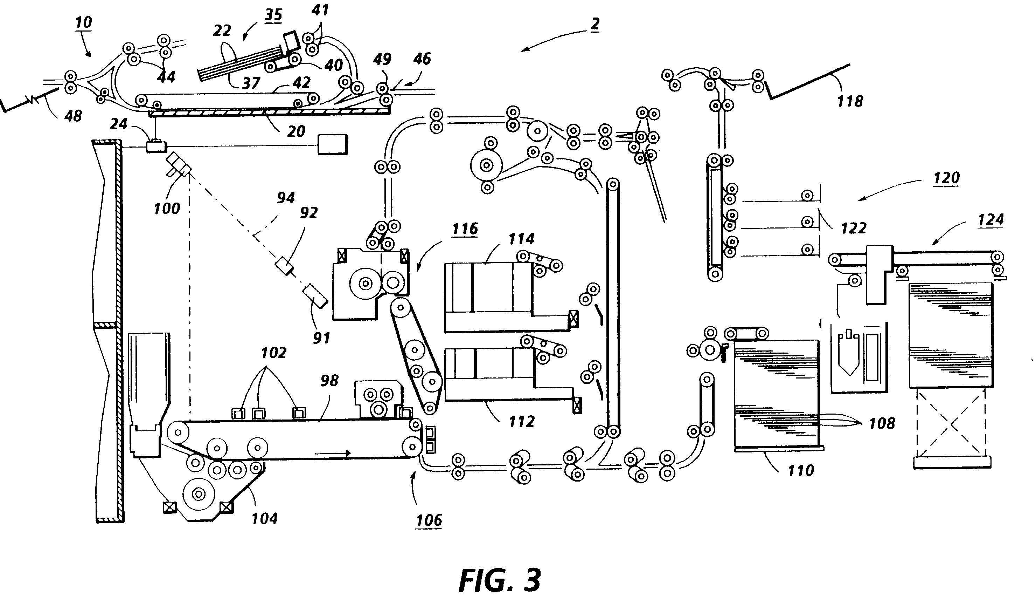

Referring to Figures 2 and 3, printer section 8 has a laser printer with a laser 91 modulated in accordance with the content of an image signal input by acousto-optic modulator 92 to provide imaging beam 94. Beam 94 is scanned across a moving photoreceptor 98 in the form of a belt by the mirrored facets of a rotating polygon 100 to imagewise expose photoreceptor 98 and create the latent electrostatic images represented by the image signal input to beam modulator 92. Photoreceptor 98 is uniformly charged by corotrons 102 at a charging station preparatory to exposure by imaging beam 94. The latent electrostatic images are developed by developer 104 and transferred at transfer station 106 to a sheet 108 of copy substrate material brought forward in timed registration therewith from either main paper tray 110 or from auxiliary paper tray 112, or 114. The developed image on sheet 108 is permanently fixed or fused by fuser 116, the resulting prints being discharged to output tray 118, or alternately to finisher 120. Finisher 120 includes a stitcher 122 for stitching or stapling the prints together to form books and a thermal binder 124 for adhesively binding the prints into books.

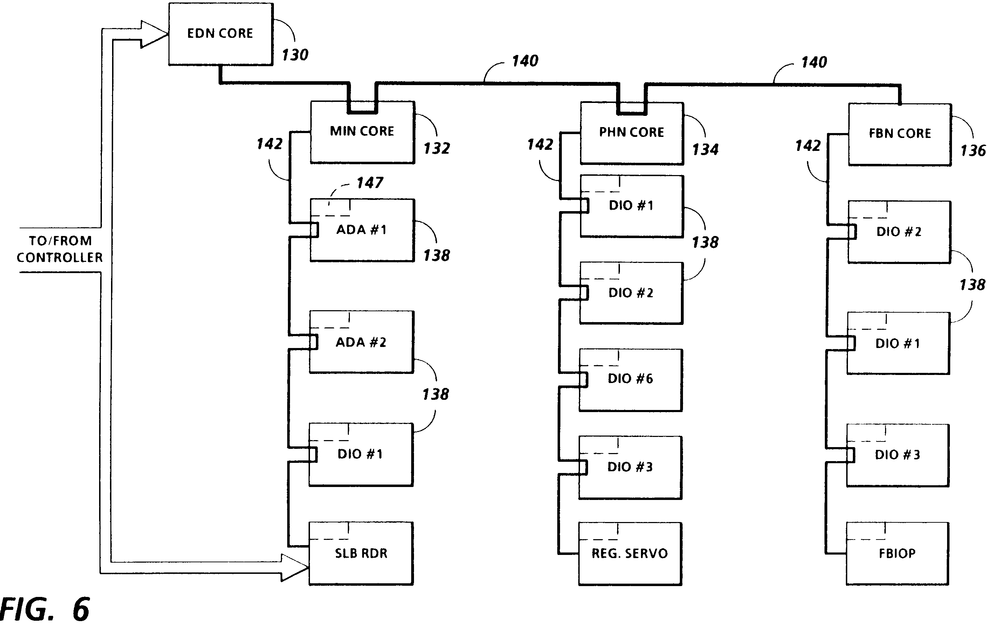

Referring particularly to Figure 6, a plurality of printed wiring boards (PWBs) including EDN core PWB 130, a Marking Imaging core PWB 132, a Paper Handling core PWB 134, and a Finisher Binder core PWB 136 together with various Input/Output (I/O) PWBs 138 are provided. A system bus 140 couples the core PWBs 130, 132, 134, 136 with each other and with memory 56 while local buses 142 serve to couple the I/O PWBs 138 with each other and with their associated core PWB.

On machine power up, the Operating System software is loaded from memory 56 to EDN core PWB 130 and from there to the remaining core PWBs 132, 134, 136 via bus 140, each core PWB 130, 132, 134, 136 having a boot ROM 147 for controlling downloading of Operating System software to the PWB, fault detection, etc. Boot ROMs 147 also enable transmission of Operating System software and control data to and from PWBs 130, 132, 134, 136 via bus 140 and control data to and from I/O PWBs 138 via local buses 142. Additional ROM, RAM, and NVM memory types are resident at various locations within system 2.

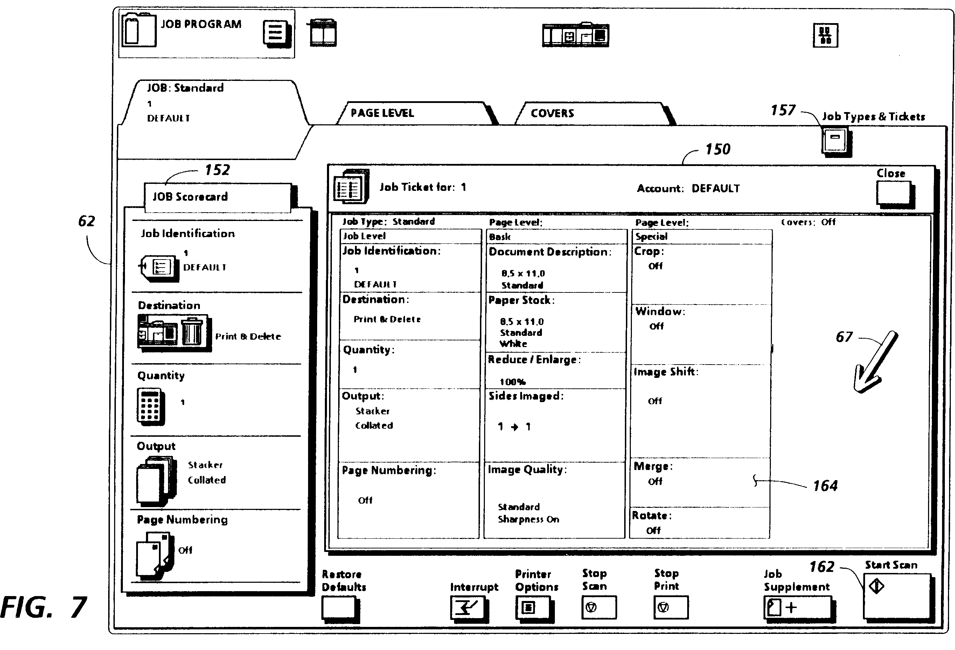

Referring to Figure 7, jobs are programmed in a Job Program mode in which there is displayed on touchscreen 62 a job Ticket 150 and a Job Scorecard 152 for the job being programmed. Job Ticket 150 displays various job selections programmed while job Scorecard 152 displays the basic instructions to the system for printing the job. Various Job Ticket types are provided, with access by means of Job Types and Tickets icon 157.

Job Tickets 150 have three programming levels, referred to as "Job Level", "Basic", and "Special", each having a series of icons for accessing the various programming selections available at that level. Each programming level has a Scorecard 152 associated with it so that on activation of a particular job level or of a specific icon, the appropriate Scorecard is displayed on touchscreen 62.

As described print jobs may be derived from multiple sources, i.e., jobs scanned in using scanner 6 for printing; jobs scanned in, stored, and then edited or added to for printing later; jobs remotely scanned in and submitted to the system as for example through net 5; jobs remotely developed and then submitted to the system for printing; etc.

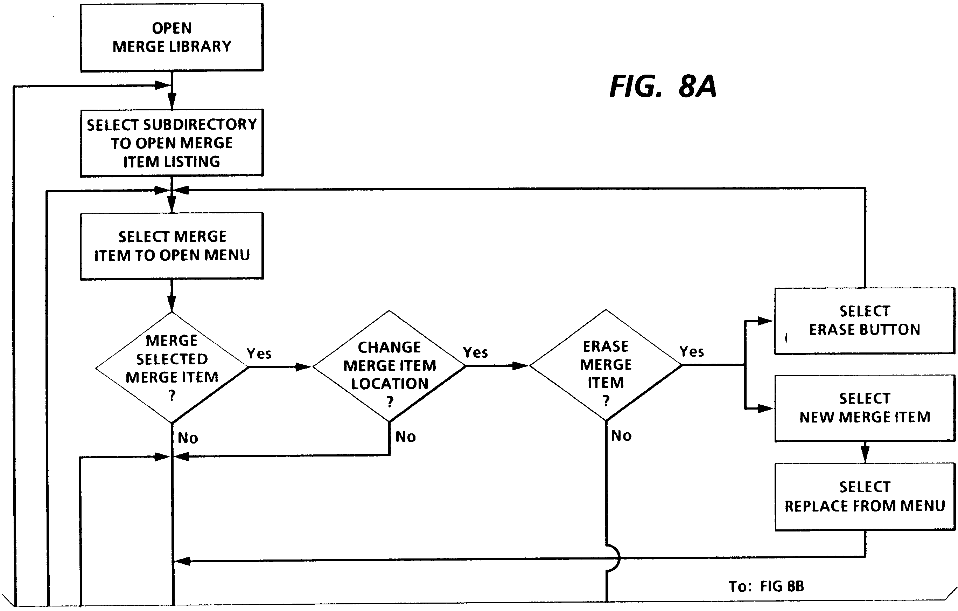

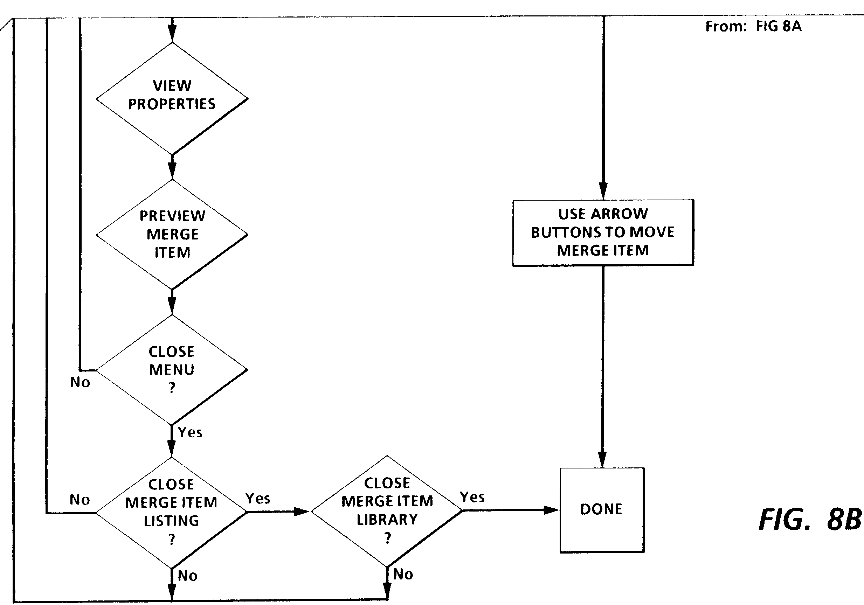

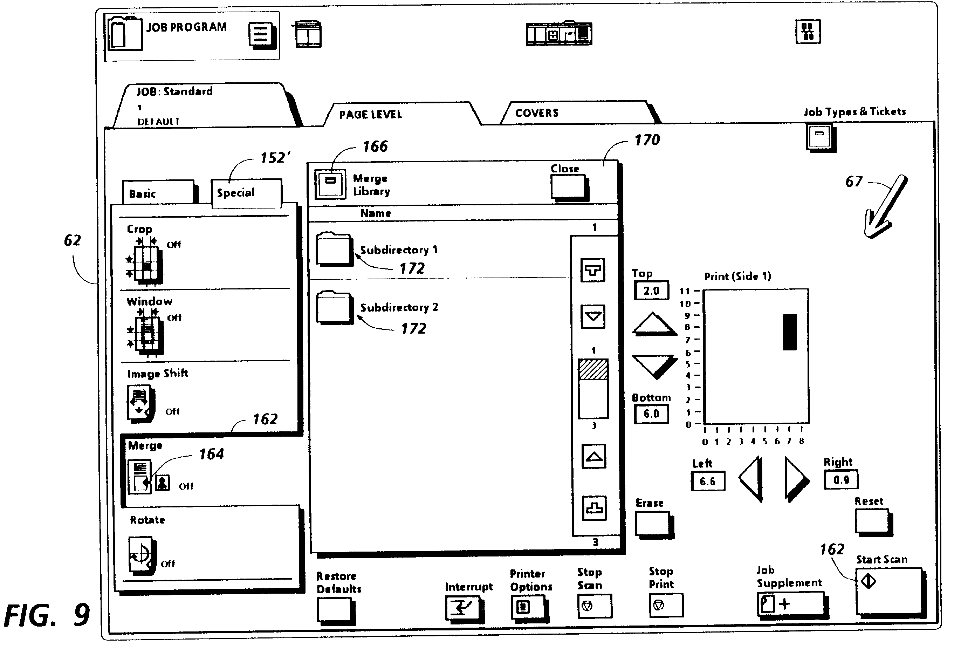

Referring particularly to Figures 7-9, to apply a merge item to a job, "Merge" selection 164 of Job ticket 150 is actuated to display "Special" scorecard 152'. Actuating "Merge" icon 164 on Special Scorecard 160 displays in the area of touchscreen 62 alongside "Special" scorecard 160 a Merge Library card file 170 together with a Merge Library icon 166. Actuation of icon 166 opens a Merge Library card file 170 (OPEN MERGE LIBRARY) showing, in numerical order, the principal subdirectories 172 of merge items 168 currently in the Merge Library. The Merge Library is a repository in main memory 56 for standard or merge images (herein identified as merge items 168) that may be selected for merger with the images of a print job. Merge items 168 may comprise pictures, logos, headings, form paragraphs, etc.

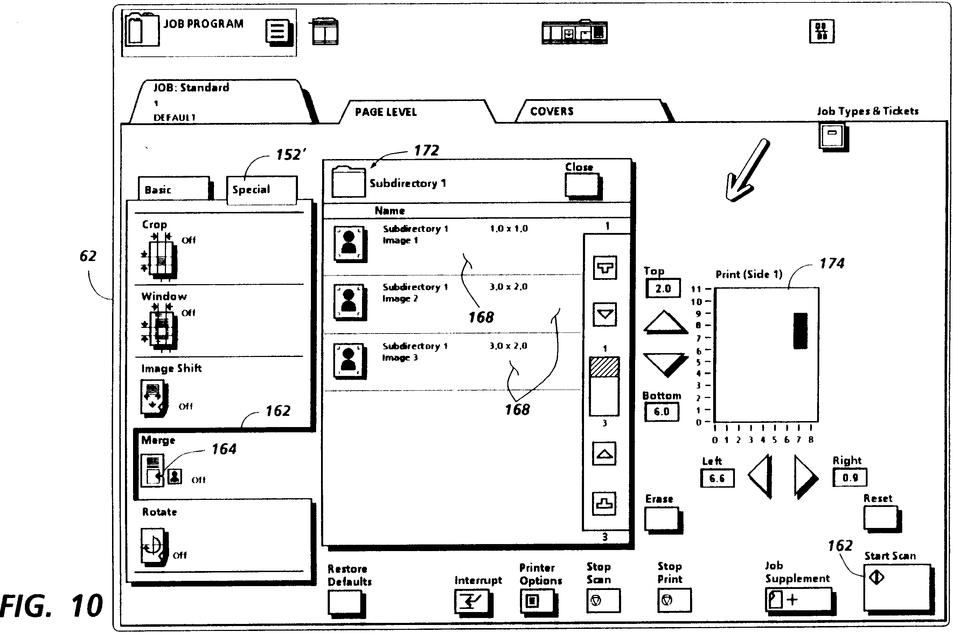

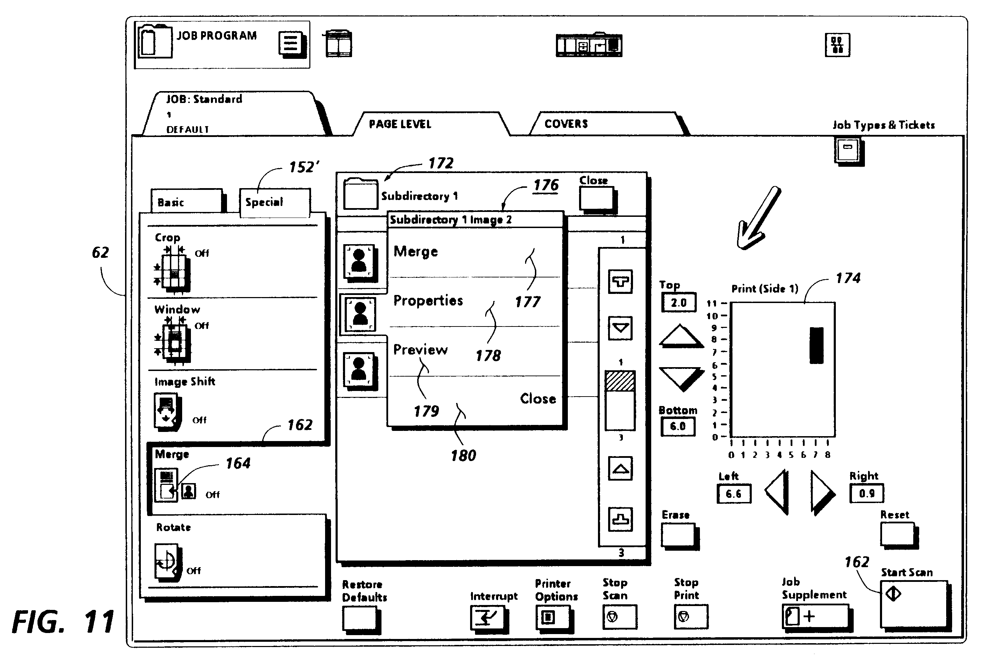

Referring particularly to Figures 10 and 11, actuation of a particular subdirectory 172 (SELECT SUBDIRECTORY TO OPEN MERGE ITEM LISTING) opens the subdirectory selected to display a listing of the merge items 168 in the subdirectory. Each merge item 168 has a descriptor which identifies the specific subdirectory 172 in which the merge item belongs, the number of the merge item in the subdirectory, and the size of each merge item. Actuation of a particular merge item (SELECT MERGE ITEM TO OPEN MENU) in the subdirectory 172 selects a merge item (i.e., "image 2") for merger (MERGE SELECTED MERGE ITEM) and displays a property sheet 176 having MERGE, PROPERTIES, PREVIEW, and CLOSE selections 177, 178, 179, and 180 respectively. A print outline 174 is also displayed on touchscreen 62 on one side of card file 170 having a scale of numbers extending along one side (i.e., along the Y axis) and along the bottom (i.e., along the X axis). By comparing the dimensions listed in the subdirectory with the scale of numbers on the print outline 174 as will appear, the operator can determine the relative size and orientation of a selected merge item 168.

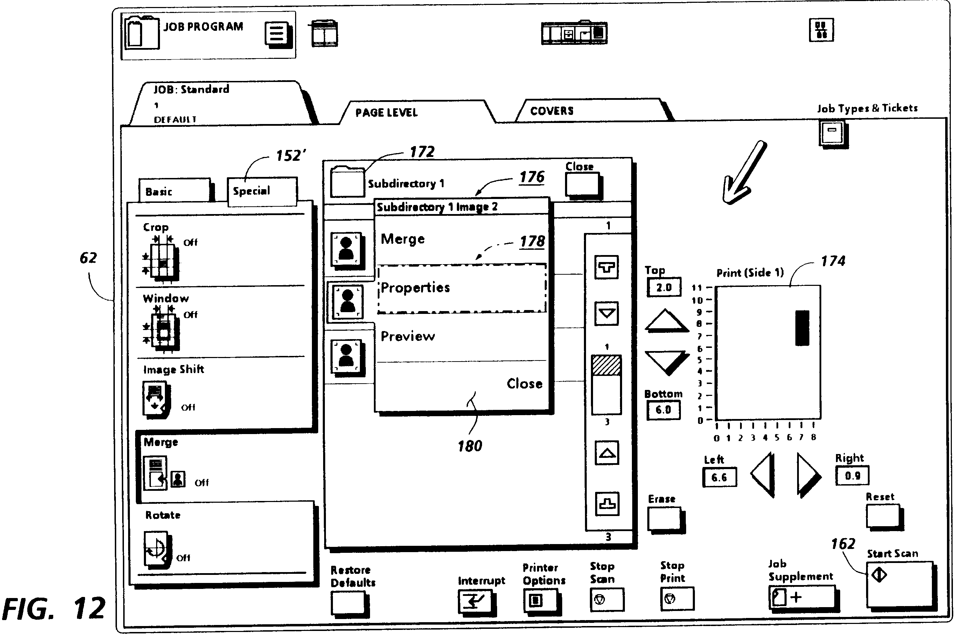

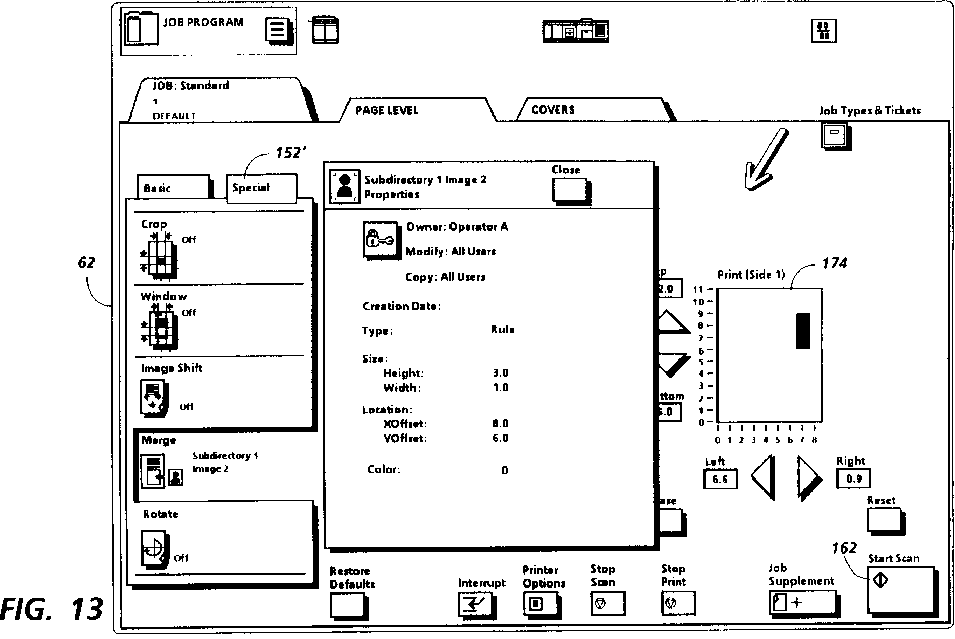

As shown in Figures 12 and 13, selecting PROPERTIES 178 on property sheet 176 (VIEW PROPERTIES) displays on touchscreen 12 the properties of the selected merge item 168 such as the owner, creation date, etc. To protect against unwarranted accessing or tampering with the merge items in the merge library, the owner or the merge item may impose security restrictions limiting access to certain designated persons, or classes of persons, or without restriction (as "All Users" shown in Figure 13). Restrictions may be imposed also on the ability of persons accessing the merge library to change a merge item or to make copies (as in the example of Figure 13 where "All Users" are allowed to "Modify" the merge item). PROPERTIES is closed to return to the property sheet 176 by activating close button 181.

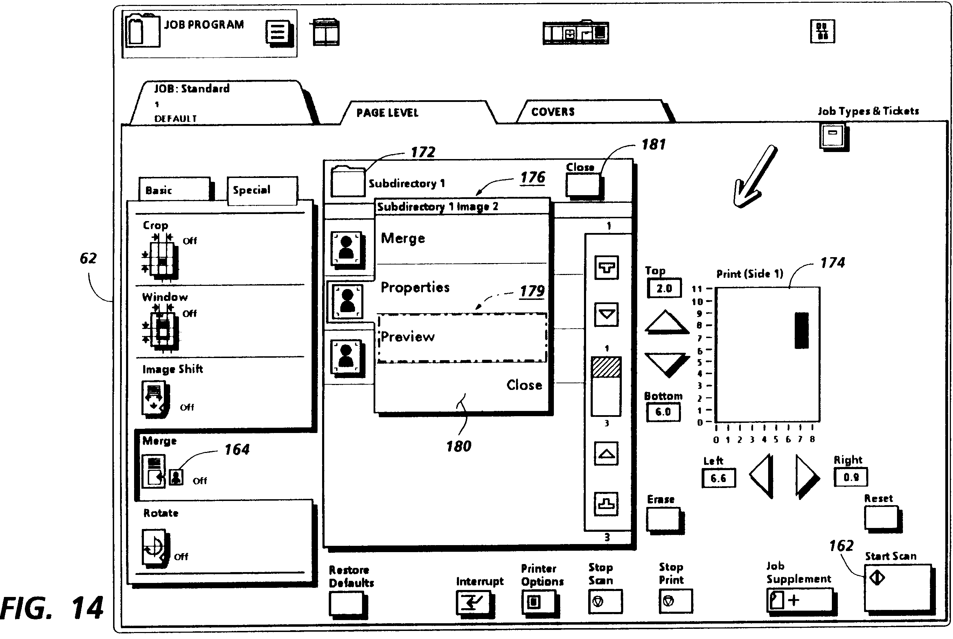

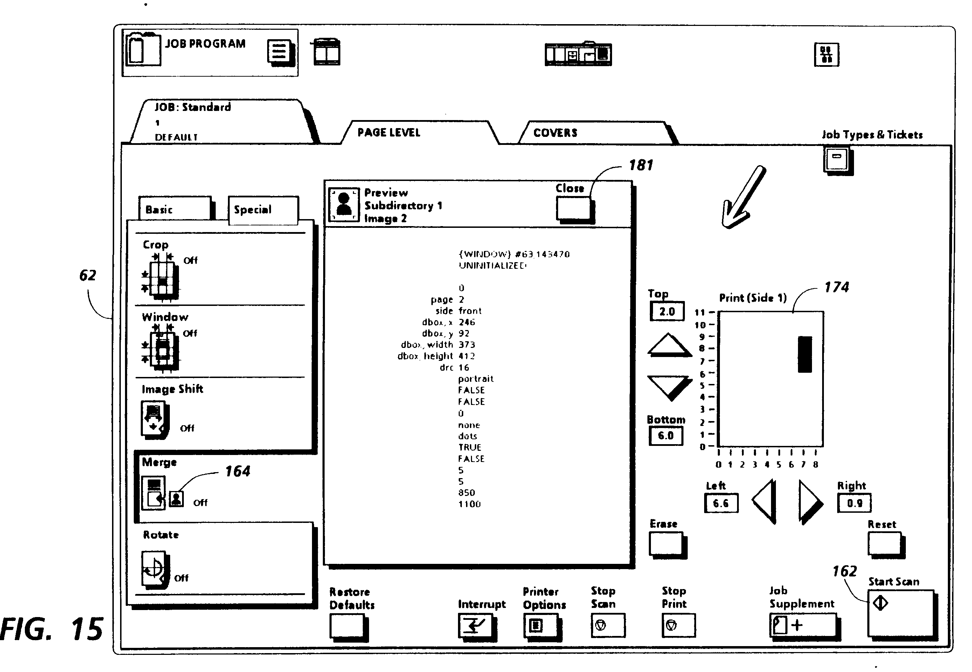

Selecting PREVIEW 179 (PREVIEW MERGE ITEM-Figures 14 and 15) displays further and somewhat more specific data about the merge item such as the specific position and size of the merge item in inches, type of merge item, etc. PREVIEW is closed to return to the property sheet 176 by activating close button 181.

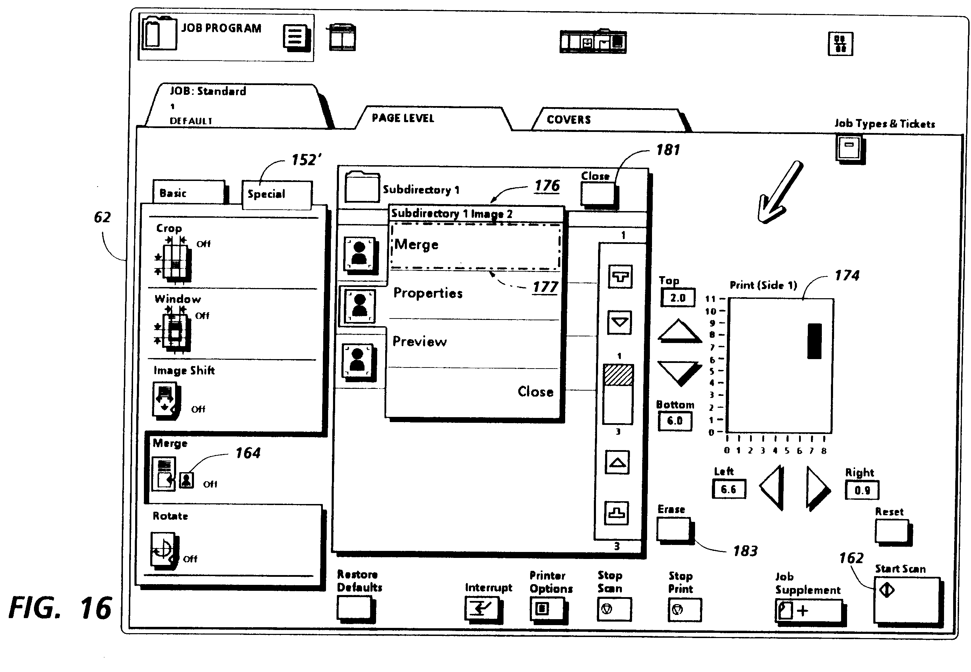

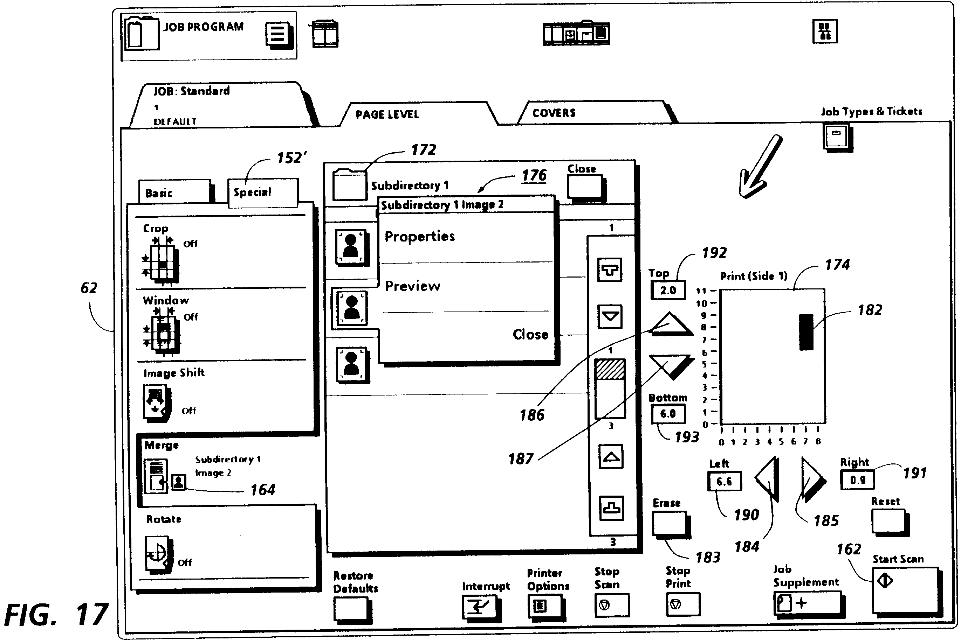

Referring now to Figures 16 and 17, selecting MERGE 177 displays in outline form a representation 182 of the selected merge item on print sheet display 174, depicting the current size of the merge item 168 relative to the print and the position of the merge item on the print sheet. The dimensions of the print outline 174 and merge item 168 are proportional to the actual size of the prints 108 produced by printing system 2 and the actual size and location of the merge item 168 relative to the prints.

To enable the operator to change the location of the merge item (CHANGE MERGE ITEM LOCATION), i.e., to change the position of the merge item on the print, there is provided pairs of X direction and Y direction scrolling icons 184, 185 and 186, 187 respectively. By using scrolling icons 184 and 185 (USE ARROW BUTTONS TO MOVE MERGE ITEM), the position of the merge item along the X axis may be changed. Similarly, by using scrolling icons 186 and 187, the position of the merge item along the Y axis may be changed. Numerical displays 190, 191, 192, 193 show the X and Y positions of the merge item using the scale of numbers displayed on sheet display 174. Return to the property sheet is effected by actuating close button 181.

Where desired, the merge item may be erased (ERASE MERGE ITEM) by actuating ERASE button 183 (SELECT ERASE BUTTON). A new merge item (SELECT NEW MERGE ITEM) or a replacement merge item from the subdirectory (SELECT REPLACE FROM MENU) selection may be made.

Following completion of the various options, the merge library listing 170 is closed (CLOSE MERGE ITEM LISTING) by activating CLOSE 180 and the merge library closed (CLOSE MERGE LIBRARY) by activating close button 181. As a result, the selected merge item is programmed for merger in the job program.

Merge items 168 in merge library 167 may be derived by scanning in a document having the desired merge item thereon or through input from a remote source via net 5, streaming tape, etc.. Where scanned in, the document containing the merge item is placed on platen 20 and ADH 35 operated, typically in the manual scanning mode, to scan the document and convert the document image to image signals. However, since merge items 168 are typically smaller than a standard image, the merge item normally requires editing to remove extraneous image matter, set the size and orientation of the merge item, etc. as might be desired.

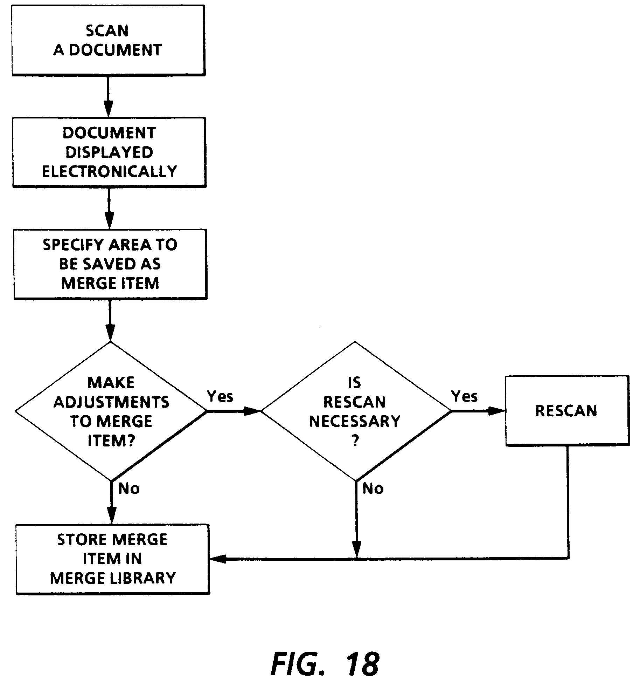

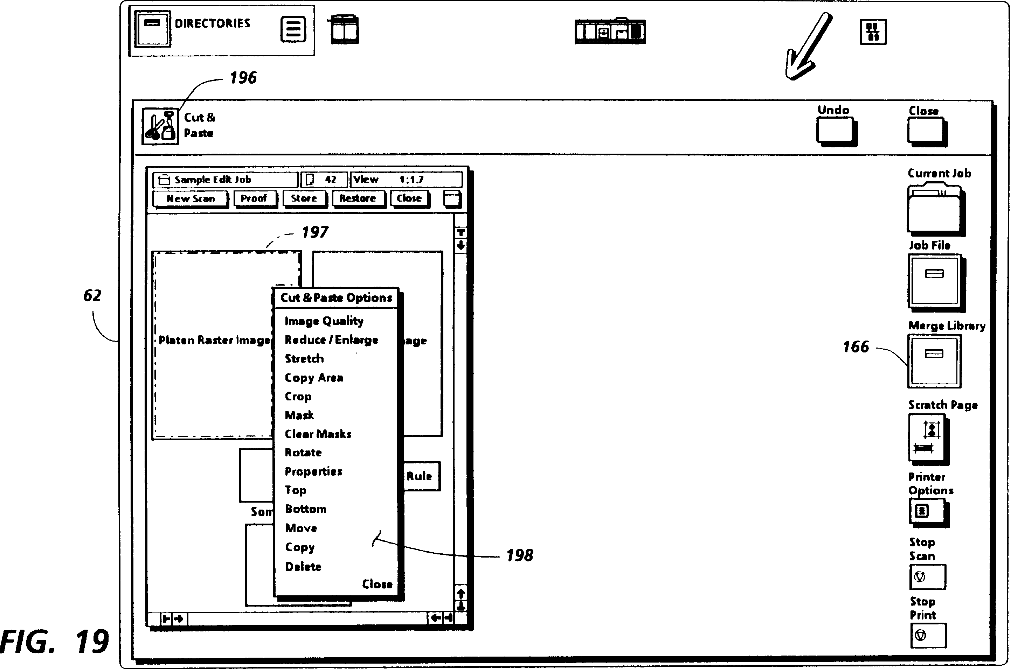

For this, a cut and paste programming routine is used to in effect program scanner section 6 to provide a merge item of the size, shape, and content desired. Referring to Figures 18 and 19, the Job Program mode is entered and the document bearing the merge item placed on platen 20. A cut and paste icon 196 displayed on touchscreen 17 is actuated, displaying programming selections 198 available for cut and paste processing. START/SCAN icon 69 is actuated to operate ADH 35 and scan the document (SCAN IN DOCUMENT). The image signals produced, after processing by processor 25, are stored in main memory 56. The image signals are also input to UI 52 to display the scanned page including merge item on touchscreen 26 (DOCUMENT DISPLAYED ELECTRONICALLY). Following scanning, the document is retained on platen 20 until the cut and paste process is completed as will appear.

Using the display on touchscreen 26, the operator selects the area of the displayed image that is to comprise the merge item (SPECIFY AREA TO BE SAVED AS MERGE ITEM) and edits (i.e., CHOP) the image (MAKE ADJUSTMENTS TO MERGE ITEM) to provide the merge item desired. Each change made to the displayed image is shown on touchscreen 26 as the change occurs, enabling the operator to observe each change as the change is made. The operator also has the option of changing the size of the merge item by selecting REDUCE/ENLARGE, changing the orientation of the merge item by selecting ROTATE, etc.

When the operator is satisfied with the look of the merge item, START/SCAN icon 69 is actuated to cause ADF 35 to rescan the merge item bearing document on platen 20 (RESCAN), with image capture limited to the image area defined by the boundaries of the merge item as programmed by the operator. Other changes to the merge item that were programmed by the operator, i.e.move, are carried out by processor 25. The finished merge item is stored in main memory 56 in the subdirectory in Merge Library 167 selected by the operator (STORE MERGE ITEM IN MERGE LIBRARY) pending use. Where the merge item is created contemporaneous with programming a print job for the job, the merge item is used immediately with the job. Following completion of the job, the merge item may either be saved in Merge Library 167 or discarded.

While the invention has been described with reference to the structure disclosed, it is not confined to the details set forth, but is intended to cover such modifications or changes as may come within the scope of the following claims.

**Claims**

1. A process for merging a merge item (168) with the prints output by an electronic printer (8) when printing a print job, including providing a library of electronic merge items (168) in memory means (56) for merging with prints output by said printer (8), programming a print job, providing electronic images for use in making prints for said job and selecting one of said merge items (168) in said library for merging with the prints of said job, characterized by electronically displaying on a screen (62) a print outline (174) together with an outline of the merge item (168) selected superimposed on said print outline (174), adjusting a parameter of said selected merge item (168) on said print outline (174) while displaying each change made in the parameter of said selected merge item (168) relative to said print on said screen (62), and merging the adjusted merge item (168) with each of the prints produced by said printer (8) for said job.

2. A process as claimed in claim 1, characterized in that the size and/or location of said selected merge item (168) is adjusted on said print outline (174) while displaying each change made in the size and/or location of said selected merge item (168) relative to said print on said screen (62).

3. A process as claimed in claim 1 or claim 2, charaterized by returning the adjusted merge item (168) to said memory means (56) following completion of said print job.

4. A process as claimed in any one of claims 1 to 3, characterized by creating said selected merge item (168) for said library by scanning a page with said merge item to provide an electronic merge item of said page including said merge item (168), displaying said page on said screen (62), removing images other than said merge item (168) from said page displayed on said screen (62), rescanning the image portion of said page remaining after said removal of images to provide said merge item (168), and storing said merge item (168) in said library in said memory means (56).

5. A process as claimed in claim 4, chacterized by adjusting the properties of the merge item (168) displayed on said screen (62), rescanning said page, processing the image signals produced to provide the merge item (168) with said adjusted properties, and storing said merge item (168) with said adjusted properties in said library in said memory means (56).

6. An electronic printing system (2) having memory means (56) for storing electronic images for a print job, printing means (8) for making prints from said electronic images, and an electronic display screen (62), image creating means for providing a library of electronic merge items in said memory means (56) for merging with the prints of said print job produced by said printing means (8), and selecting means for selecting one of said merge items (168) from said memory means (56) for merging with said prints, characterized by display means for electronically displaying on said screen (62) a print outline (174) together with an outline of the merge item (168) selected superimposed on said print outline (174), adjusting means for adjusting the size and/or location of said selected merge item (168) on said print outline (174) while displaying each change made in the size and/or location of said selected merge item (168) relative to said print on said screen (62), and merging means for merging the adjusted merge item (168) with the electronic images comprising said print job when printing said print job.

7. A process as claimed in any one of claims 1 to 5, characterized by, creating said selected merge item (168) for said library by placing a page bearing said merge item (168) on a platen (20) of an electronic printing system (2), actuating scanning means to scan said page and provide an electronic image of said page including said merge item (168), and while retaining said page on said platen (20), displaying said page on said screen (62), removing images other than said merge item (168) from said page, rescanning the image area of said page remaining after said images are removed to provide said merge item (168) and storing said merge item (168) in said library in said memory means (56).

8. A process for creating a library of merge items (168) for merger with prints produced by an electronic printer (8), characterized in that for each one of said merge items (168), scanning a document having an image of the merge item (168) thereon to provide image signals of the document image including the merge item (168), using said image signals to provide a display of the scanned image of said document on a screen (62), removing images other than said merge item image (168) from the document image displayed on said screen (62), rescanning the portion of the document image following said removal of images to provide image signals representative of said merge item image, and storing said image signals of said merge item image in said library.

9.  A process for merging a merge item (168) such as a logo with the prints output by an electronic printer (8) when printing a print job, said printer including a platen (20), scanning means for scanning the pages comprising print jobs placed on said platen (20) to provide electronic images of said pages for use in making prints, printing means (8) for making prints from said electronic images, and an electronic display screen (62), including programming a print job, characterized by creating a logo for said print job by placing a page bearing said logo on said platen (20), actuating said scanning means to scan said page and provide an electronic image of said page including said logo, and while retaining said page on said platen, displaying said electronic image of said page on said screen (62), removing images other than said logo from said page, and actuating said scanning means to rescan the portion of the image remaining on said page following said removal of images to provide said logo, actuating said scanning means to scan the pages that comprise said print job to provide electronic images for use in making prints for said print job, electronically displaying on said screen (62) a print outline (174) together with an outline of said logo superimposed on said print outline (174) in the location where said logo will appear on the prints output by said printing means (8) and with the relative size of said print and said logo outlines proportional to the size of the prints and the logo printed by said printing means (8), adjusting the location of said logo on said print outline (174), displaying each change made in the location of said logo relative to said print outline (174) on said screen (62), and merging the logo with each of the prints produced by said at the location selected.

10. A process as claimed in claim 10, characterized by storing said adjusted logo in a library for future use.

**FIG. 1**

EP 0 478 335 A2

EP 0 478 335 A2

## IMAGE INPUT

**4**

**6**

PLATEN
20

CCD
24

AGC PWB

PROCESSOR
25

NET
5

11

## CONTROLLER

**7**

USER INTERFACE
52

IMAGE INPUT CONTROL
50

COMP.
51

SYSTEM CONTROL
72

54

IMAGE OUTPUT CONTROL
74
60

IMAGE MANIPU-LATION
58

DISK
56
90-1, -2, -3

## PRINTER

**8**

ROS
87

PRINT MODULE
95

PAPER SUPPLY
107

FINISHER
120

*FIG. 2*

**FIG. 3**

EP 0 478 335 A2

*FIG. 4*

# FIG. 5A

54

SYSTEM MEMORY

61

MEMORY CONTROLLER

76

MEMORY BUS A

72

To FIG 5B

70-9

88

DISPATCHER PROCESSOR BUS A

89

DISPATCHER PROCESSOR BUS B

70-1

78

SYSTEM PROCESSORS

8

PRINTER

70-10

MEMORY BUS ARBITRATION LOGIC

BOOT DOWNLOAD CONTROL LOGIC

CHANNEL LOADER/ SCHEDULER PROCESSOR

ETHERNET PROCESSOR

BOOT BUS PROCESSOR

MEMORY BUS ARBITRATION CONTROL LINES TO EACH CHANNEL PROCESSOR

BOOT CONTROL DATA LINES TO EACH CHANNEL PROCESSOR

86

BOOT BUS

To FIG 5B

MEMORY BUS B

74

86

IMAGE GENERATOR PROCESSORS

IMAGE GENERATOR PROCESSORS

86

70-7

70-8

14

EP 0 478 335 A2

# FIG. 5B

From FIG 5A

To FIG 5C

MEMORY BUS A — 72

70-2

70-3

**LOW SPEED INPUT/ OUTPUT PROCESSOR** ⟷ **SHARED LOCAL RAM**

**IMAGE COMPRESSION PROCESSOR** **SYSTEM PROCESSORS** **DISK DRIVE CONTROLLER PROCESSOR**

**BOOT CONTROL & LSIO SERVICES PROCESSOR** **BOOT BUS PROCESSOR** **TAPE DRIVE CONTROLLER** **SERIAL COMMUNI- CATIONS CONTROLLER** **UI COMMUNI- CATIONS CONTROLLER**

**SCANNER**

6

51

82

**TOP DISK**

90-1

80

BOOT BUS

From FIG 5A

**MAINTENANCE PANEL**

**STREAMING TAPE DRIVE**

1. **PORTABLE PRINTER PORT**
2. **RS232 PORTS (RIC MODEM, TERMINAL, PERIPHERAL)**

**USER INTERFACE**

52

EP 0 478 335 A2

# FIG. 5C

FIG. 6

**JOB PROGRAM**

**JOB: Standard**
1
DEFAULT

**PAGE LEVEL**

**COVERS**

157 — **Job Types & Tickets**

150

152

**JOB Scorecard**

62

**Job Identification**
1
DEFAULT

**Destination**
Print & Delete

**Quantity**
1

**Output**
Stacker
Collated

**Page Numbering**
Off

**Job Ticket for: 1**　　　　**Account: DEFAULT**　　**Close**

| Job Type: Standard | Page Level: | Page Level: | Covers: Off |
|---|---|---|---|
| Job Level | Basic | Special | |
| Job Identification:　1　DEFAULT | Document Description:　8.5 x 11.0　Standard | Crop:　Off | |
| Destination:　Print & Delete | Paper Stock:　8.5 x 11.0　Standard　White | Window:　Off | |
| Quantity:　1 | Reduce / Enlarge:　100% | | |
| Output:　Stacker　Collated | Sides Imaged:　1 → 1 | Image Shift:　Off | |
| Page Numbering:　Off | Image Quality:　Standard　Sharpness On | Merge:　Off | |
| | | Rotate:　Off | |

67

164

**Restore Defaults**

**Interrupt**

**Printer Options**

**Stop Scan**

**Stop Print**

**Job Supplement**

162

**Start Scan**

**FIG. 7**

FIG. 8A

Flowchart:

OPEN MERGE LIBRARY
↓
SELECT SUBDIRECTORY TO OPEN MERGE ITEM LISTING
↓
SELECT MERGE ITEM TO OPEN MENU
↓
MERGE SELECTED MERGE ITEM ? — No / Yes →
CHANGE MERGE ITEM LOCATION ? — No / Yes →
ERASE MERGE ITEM ? — No / Yes →
SELECT ERASE BUTTON
SELECT NEW MERGE ITEM
↓
SELECT REPLACE FROM MENU

To: FIG 8B

From: FIG 8A

FIG. 8B

FIG. 9

JOB PROGRAM

JOB: Standard
DEFAULT

PAGE LEVEL

COVERS

Job Types & Tickets

67

170

Print (Side 1)

Top 2.0
Bottom 6.0
Left 6.6
Right 0.9

11 10 9 8 7 6 5 4 3 2 1 0
0 1 2 3 4 5 6 7 8

Close

Merge Library

166

Name

Subdirectory 1 — 172
Subdirectory 2 — 172

152'

Basic    Special

Crop    Off
Window    Off
Image Shift    Off
Merge    Off    164
Rotate    Off

162

62

Erase

Restore Defaults

Interrupt

Printer Options

Stop Scan

Stop Print

Reset

Start Scan    162

Job Supplement

FIG. 10

FIG. 11

JOB PROGRAM

JOB: Standard 1 DEFAULT

PAGE LEVEL    COVERS    Job Types & Tickets

152'

Basic    Special

Crop — Off
Window — Off
Image Shift — Off
Merge — Off
Rotate — Off

62

164

162

172

Subdirectory 1

176    Close

Subdirectory 1 Image 2

Merge

Properties    177

Preview    178

179    Close

180

1

1

3

3

Top    2.0
Bottom    6.0

Erase

Print (Side 1)    174

11 10 9 8 7 6 5 4 3 2 1 0
0 1 2 3 4 5 6 7 8

Left    6.6
Right    0.9

Reset

162

Restore Defaults    Interrupt    Printer Options    Stop Scan    Stop Print    Job Supplement    Start Scan

EP 0 478 335 A2

23

FIG. 12

FIG. 13

FIG. 14

EP 0 478 335 A2

**JOB PROGRAM**

JOB: Standard
1
DEFAULT

PAGE LEVEL

COVERS

Job Types & Tickets

181

Preview
Subdirectory 1
Image 2

Close

Basic | Special

Crop
Off

Window
Off

Image Shift
Off

Merge — 164
Off

Rotate
Off

62

{WINDOW} #63.143470
UNINITIALIZED

0
page  2
side  front
dbox, x  246
dbox, y  92
dbox, width  373
dbox, height  412
drc  16
portrait
FALSE
FALSE
0
none
dots
TRUE
FALSE
5
5
850
1100

Top
2.0

Bottom
6.0

Print (Side 1)  174

11
10
9
8
7
6
5
4
3
2
1
0
0 1 2 3 4 5 6 7 8

Left
6.6

Right
0.9

Erase

Reset

Restore
Defaults

Interrupt

Printer
Options

Stop
Scan

Stop
Print

Job
Supplement

162

Start Scan

**FIG. 15**

FIG. 16

FIG. 17

```
                    ┌─────────────────┐
                    │      SCAN       │
                    │   A DOCUMENT    │
                    └────────┬────────┘
                             │
                             ▼
                    ┌─────────────────┐
                    │    DOCUMENT     │
                    │    DISPLAYED    │
                    │  ELECTRONICALLY │
                    └────────┬────────┘
                             │
                             ▼
                    ┌─────────────────┐
                    │ SPECIFY AREA TO │
                    │  BE SAVED AS    │
                    │   MERGE ITEM    │
                    └────────┬────────┘
                             │
                             ▼
```

MAKE ADJUSTMENTS TO MERGE ITEM?  — Yes →  IS RESCAN NECESSARY ?  — Yes →  RESCAN

No ↓ (from MAKE ADJUSTMENTS)   No ↓ (from IS RESCAN NECESSARY)

STORE MERGE ITEM IN MERGE LIBRARY

## FIG. 18

FIG. 19

EP 0 478 335 A2